# EUROPÄISCHE PATENTSCHRIFT

(11) **EP 1 333 966 B1**
(45) Veröffentlichungstag und Bekanntmachung des Hinweises auf die Patenterteilung: **18.05.2005**
(21) Anmeldenummer: 01956336.0
(22) Anmeldetag: 13.07.2001
(51) Int. Cl.: B29B 9/06, F16D 3/18, B26D 7/26, B01J 2/20

(54) **VERBINDUNG EINER ANTRIEBSWELLE MIT DER MESSERKÖRPERNABE FÜR UNTERWASSERGRANULATOREN**
ASSEMBLY OF A DRIVE SHAFT WITH THE CUTTING HEAD HUB OF A SUBMERSIBLE GRANULATOR
ASSEMBLAGE D'UN ARBRE D'ENTRAINEMENT AVEC LE MOYEU DE CORPS DE COUTEAU POUR GRANULATEURS IMMERGES

(30) Priorität: 17.11.2000 DE 10056991
(43) Veröffentlichungstag der Anmeldung: 13.08.2003
(73) Patentinhaber: BKG Bruckmann & Kreyenborg Granuliertechnik GmbH, 48157 Münster (DE)
(72) Erfinder: BRUCKMANN, Theodor, 46509 Xanten (DE)
(74) Vertreter: Habbel, Hans-Georg, Dipl.-Ing.
(86) Internationale Anmeldenummer: PCT/DE2001/002689
(87) Internationale Veröffentlichungsnummer: WO 2002/040236

(56) Entgegenhaltungen:
- EP-A- 0 462 705
- EP-A- 0 565 119
- US-A- 3 196 487
- US-A- 3 266 090
- US-A- 4 003 218
- US-A- 4 969 371

## Beschreibung

Die Erfindung bezieht sich auf eine Verbindung einer Antriebswelle mit der Messerkörpemabe für Unterwassergranulatoren gemäß dem Oberbegriff des Hauptanspruches.

Sich selbst ausrichtende Messerkörpemaben zur Verbindung der Messerkörpernabe mit einer Antriebswelle sind bekannt, wobei die sich selbst ausrichtende Nabe die Messerklingen der Messerkörperscheibe in die Lage versetzen, eine optimale parallele Anordnung in bezug auf die Gegenschneiden bzw. den Extrusionsdüsenteller einzunehmen.

Bei der Anordnung gemäß der DE 196 42 389 A1 wird dabei so vorgegangen, daß in die Messerkörperscheibe eine Nabe eingesetzt wird, die sich gegenüber der Ebene der Messerkörperscheibe verstellen kann, so daß dadurch die Möglichkeit besteht, daß die Ebene der Messerkörperscheibe gegenüber der Achse der Antriebswelle eine leicht winklige Stellung einnimmt.

Nachteilig bei der bekannten Konstruktion ist, daß die Nabe in die Messerkörperscheibe integriert ist, so daß für jede ggf. unterschiedlich große Messerkörperscheibe der zusätzliche Einbau der aufwendigen Nabe und ihrer die Bewegung ermöglichenden Bauteilen erforderlich ist, d. h. die Messerkörperscheibe stellt ein relativ aufwendiges mehrteiliges Bauteil dar.

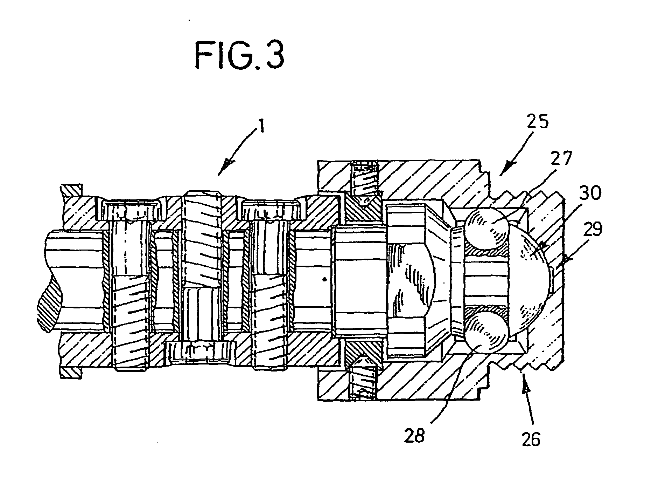

Um diesen Nachteil zu umgehen, ist bereits bei einer in der Praxis bekanntgewordenen Anordnung (Fig. 3) vorgeschlagen worden, auf die eigentliche Antriebswelle 1 eine Anschlußhaube 25 aufzubringen, die an ihrem äußersten Ende ein Außengewinde 26 aufweist, das mit einem an der Messerkörperscheibe vorgesehenen Innengewinde kämmen kann, so daß dadurch eine einfache Befestigung der Messerkörperscheibe auf der Anschlusshaube 25 möglich wird.

Die Anschlusshaube 25 selbst ist pendelnd gelagert und überträgt den Anpreßdruck der Antriebswelle 1 über ein Kugelende 30, das an der Antriebswelle 1 vorgesehen ist, auf eine entsprechende Lagerung an der Innenseite der Anschlusshaube 25. Die Antriebswelle 1 wird umlaufend angetrieben und nimmt die Anschlusshaube 25 über eine Nut-Kugelverbindung 27/28 in Umlaufrichtung mit.

Diese bekannte Konstruktion weist aufgrund dieser Antriebsverbindung zwischen Antriebswelle und Anschlußhaube den Nachteil auf, daß hier große Kräfte von den zwei Kugeln übertragen werden müssen. Das Ausarbeiten der Lagerung für das Kugelende 30 in der Abschlusshaube 25 ist aufwendig und weist zudem dort, wo die größten Kräfte übertragen werden, aus technischen Gründen eine Eindrehung 29 auf, wo keine Kraft übertragen werden kann und sich mit der Zeit eine störende Kante an der Kugel bildet.

Es ist aus vielen Druckschriften bekannt, Zahnradverbindungen für die Kraftübertragung bei Unterwassergranulatoren zu verwenden (US-A-3 196 487, EP-A-565 119, US-A-3 266 090 oder EP-A-462 705). Der Fachmann würde daher zunächst die Aufnahme dieses **allgemein** bekannten Lösungskonzepts in die in Fig. 3 der gegenwärtigen Anmeldung beschriebene Verbindung als eine übliche konstruktive Maßnahme zur Lösung der gestellten Aufgabe ansehen. Die Zahnaußenflächen konvex gewölbt zu gestalten, um auch bei Verdrehungen eine optimale Drehmomentübertragung zu gewährleisten, ist aus der US-A-4 969 371 bekannt. Dieses Dokument gibt jedoch keine Hinweise zu Granulatoren und der Fachmann wird daher die Aufnahme dieses Merkmals (daß die Zahnaußenflächen konvex gewölbt sind) in die bekannte Verbindung nicht als eine übliche konstruktive Maßnahme zur Lösung der gestellten Aufgabe ansehen.

Der Erfindung liegt die Aufgabe zugrunde, eine sich selbst ausrichtende Verbindung zwischen Antriebswelle und Messerkörperscheibe zu schaffen, die in der Lage ist, problemlos große Kräfte zu übertragen, und zwar sowohl große Drehkräfte für den Antrieb der Messerkörperscheibe als auch große Druckkräfte, um die Messerkörperscheibe an die Gegenschneide bzw. den Extrusionsdüsenteller anzulegen.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt wird vorgeschlagen, daß im Gegensatz zum Stand der Technik, wie er aus der DE 196 42 389 A1 bekannt ist, die Messerkörperscheibe lediglich ein mit dem Außengewinde auf der Anschlußhaube kämmendes Innengewinde aufweisen muß, so daß die Messerkörperscheibe unabhängig von ihrer sonstigen Gestaltung für den Anschluß an die Antriebswelle nur ein Gewinde aufweisen muß, das mit allen Anschlußgewinden auf der Anschlußhaube der Antriebswelle kämmt. Gegenüber diesem Stand der Technik wird also eine erheblich kostenmäßige Verbesserung erreicht.

Gegenüber dem aus der in der Praxis bekanntgewordenen Stand der Technik gemäß Fig. 3 weist die erfindungsgemäße Anordnung den Vorteil auf, daß die Kraftübertragung zwischen Antriebswelle und Anschlußhaube wesentlich verbessert wird, da nunmehr eine Vielzahl von Zähnen miteinander im Eingriff stehen, trotzdem aber die gewünschte Pendelbewegung der Anschlußhaube gegenüber der Achse der Antriebswelle und gegenüber der Ebene der Messerkörperscheibe ermöglicht wird.

Die Mitnahmeverbindung zwischen Antriebswelle und Anschlußhaube wird sehr weit zum äußersten Ende der Anschlußhaube hin verschoben, wodurch eine bessere Krafteinleitung zwischen Antriebswelle, Anschlußhaube und Messerkörperscheibe erreicht wird.

Die erfindungsgemäße Konstruktion schafft eine vorteilhafte Verlagerung des Schwenkpunktes oder des Drehpunktes für die Kippbewegung und des Punktes für die Drehkraftübertragung in Richtung zur Messerkörperscheibe hin.

Zusätzlich zu der Maßnahme, daß die Zahnaußenflächen jedes Zahnes konvex gewölbt sind, kann gemäß der Erfindung vorgesehen sein, daß auch die Zahnflanken der Zähne um eine parallel zur Längsachse der Antriebswelle ausgerichtete Achse konvex gewölbt sind, d. h. jeder Zahn für sich ist in der Mitte breiter als an den Enden.

Durch das Vorsehen einer Druckübertragungsplatte, die auswechselbar vorhanden ist und in ihrem freien Zustand gut bearbeitet werden kann, wird ein Verschleißteil geschaffen, das jederzeit selbst bei geringstem auftretenden Verschleiß einfach auswechselbar ist. Die mit der Druckübertragungsplatte zusammenwirkende Kugel kann aus Hartmetall bestehen, und da sie als eigener Kugelkörper ausgebildet ist, ist sie ebenfalls austauschbar und kann bei Verschleiß schnell gewechselt werden.

Ein Ausführungsbeispiel der Erfindung wird nachfolgend anhand der Zeichnungen erläutert. Die Zeichnungen zeigen dabei in
- Fig. 1: in einer auseinandergezogenen Darstellungsweise die Antriebswelle mit anzuschließender Anschlußhaube, in
- Fig. 2: die Antriebswelle mit Anschlußhaube im zusammengebauten Zustand und in
- Fig. 3: eine zum Stand der Technik gehörende Konstruktion.

In den Zeichnungen ist mit 1 eine Antriebswelle bezeichnet, die an ihren zu der anzuschließenden Messerkörperscheibe, die in der Zeichnung nicht dargestellt ist, hinweisenden Ende 2 eine Außenverzahnung 3 aufweist, die durch einen Zahnkranz 4 gebildet wird, der einzelne Zähne 7 aufweist. Die Zahnaußenflächen jedes Zahnes 7 sind dabei wie aus der Zeichnung ohne weiteres zu erkennen ist, konvex gewölbt, wobei auch bei dem dargestellten Ausführungsbeispiel die Zahnflanken der Zähne 7 um eine parallel zur Längsachse der Antriebswelle ausgerichtete Achse konvex gewölbt sind, d. h. mit anderen Worten, jeder Zahn 7 ist für sich in der Mitte breiter als an den Enden. Wesentlich ist die konvexe Wölbung der Zahnaußenflächen, wobei die konvexe Wölbung der Zahnseitenflächen nicht von so großer Bedeutung ist und beispielsweise aus fertigungstechnischen Gründen entfallen kann.

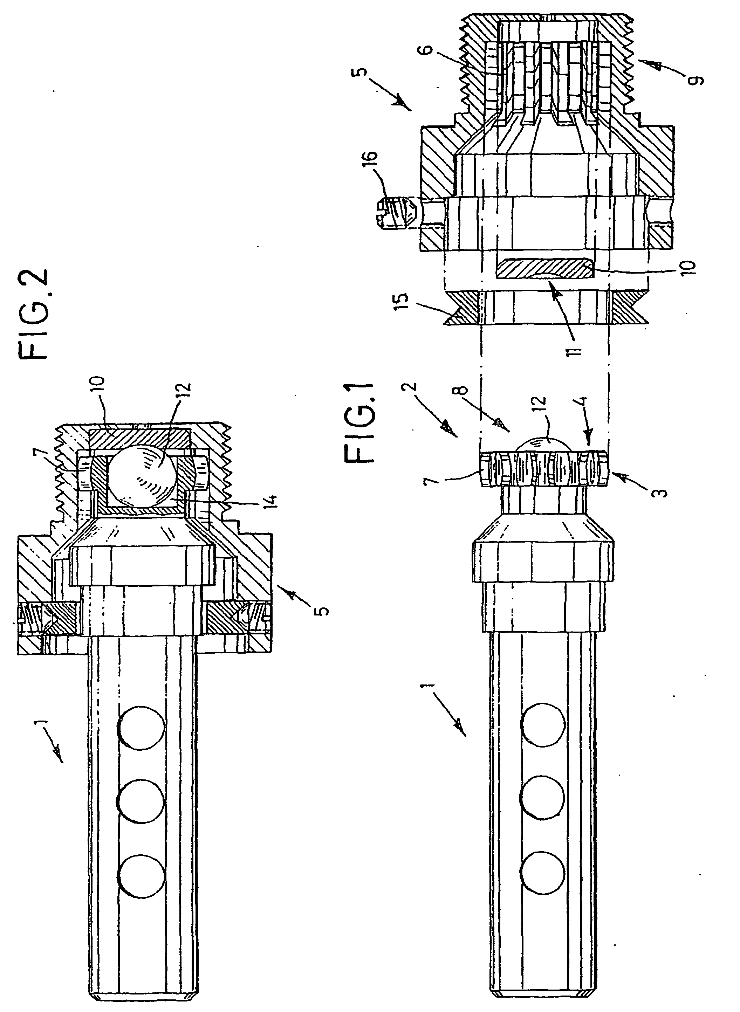

Die Antriebswelle 1 weist zur Messerkörperscheibe hin gerichteten Ende 2 ein Kugelende 8 auf, wobei dieses Kugelende 8, wie dies besonders deutlich Fig. 2 zeigt, durch eine selbständige Kugel 12 gebildet wird, die in einer entsprechenden Ausnehmung am Ende der Antriebswelle 1 angeordnet ist. Um beim Zusammenbau der Einrichtung ein Herausfallen der Kugel zu vermeiden, kann die Kugel in ihren Aufnahmeraum, der in Fig. 2 bei 14 erkennbar ist, eingeklebt werden.

Als zweites separates Bauteil ist eine Anschlußhaube 5 vorgesehen, die an ihrem mit der Messerkörperscheibe in Kontakt kommenden Bereich ein Anschlußgewinde 9 aufweist. Im Inneren weist diese Anschlußhaube 5 eine Innenverzahnung 6 auf, die mit dem Zahnkranz 4 kämmen kann, wenn dieser in den Bereich der Innenverzahnung eingesetzt ist.

Das Festlegen der Anschlußhaube 5 auf der Antriebswelle 1 erfolgt unter Zuhilfenahme eines Anschlußringes 15, der beispielsweise über Madenschrauben 16 festgelegt werden kann, aber eine Innenöffnung aufweist, die größer ist als der Bereich der Antriebswelle 1, die im Bereich dieses Anschlußringes 15 liegt, so wie dies deutlich aus Fig. 2 zu ersehen ist. Durch diese Konstruktion ist eine Relativ-Pendelbewegung zwischen der Anschlußhaube 5 und der Antriebswelle 1 möglich, die es gestattet, daß die Ebene der Messerkörperscheibe gegenüber der Achse der Antriebswelle eine leicht winklige Stellung einnehmen kann und eine optimale parallele Anordnung der Messerkörperscheibe zum Extrosionsdüsenteller gewährleistet ist.

Schließlich ist eine Druckübertragungsplatte 10 vorgesehen, die innerhalb der Anschlußhaube 5 angeordnet werden kann und als gesondertes Bauteil hergestellt ist. Diese Druckübertragungsplatte weist eine teilkugelförmige Ausnehmung 11 auf, die mit der Außenseite der Kugel 12 in Kontakt kommen kann und der Form und Größe der Kugel angepaßt ist. Die Kugel 12 kann dabei aus Hartmetall bestehen und die Druckübertragungsplatte 10 aus einem Werkstoff, der mit der Kugel 12 in optimaler Weise zusammenwirken kann.

Hieraus ist ersichtlich, daß bei Verschleißerscheinungen zwischen der Kugel 12 und der Druckübertragungsplatte 10 ein leichtes Auswechseln beider Bauteile möglich ist, ohne daß dadurch besondere Eingriffe an der Antriebswelle 1 oder der Anschlußhaube 5 erforderlich sind.

Diese Verschleißerscheinungen im Bereich zwischen Kugel 12 und Druckübertragungsplatte 10 treten deshalb auf, da die Antriebswelle 1 nicht nur die Anschlußhaube 5 auf Drehung beansprucht, sondern auch in ihrer Längsachse druckbeaufschlagt ist, um damit die Anschlußhaube 5 und die davon getragene Messerkörperscheibe mit entsprechendem Druck auf die Gegenschneide bzw. den Extrusionsdüsenteller zu pressen.

## Patentansprüche

1. Verbindung einer Antriebswelle (1) mit der Messerkörpemabe für Unterwassergranulatoren mit einer auf der Antriebswelle (1) pendelnd festlegbaren Anschlußhaube (5), die an ihrem äußeren Ende ein Außengewinde (9) für die mittels einem entsprechenden Innengewinde aufzuschraubende Messerkörpemabe aufweist, wobei die Antriebswelle (1) mit einem Kugelende (8) an der Innenseite der Anschlußhaube (5) anliegt, **dadurch gekennzeichnet, daß** am messerkörperseitigen Ende (2) der Antriebswelle (1) ein eine Außenverzahnung (3) aufweisender Zahnkranz (4) angeordnet ist,
die Anschlußhaube (5) eine mit der Außenverzahnung (3) des Zahnkranzes (4) kämmende Innenverzahnung (6) aufweist und
die Zahnaußenfläche jedes Zahnes (7) des Zahnkranzes (3) konvex gewölbt ist.

2. Verbindung nach Anspruch 1, **dadurch gekennzeichnet, daß** die Zahnflanken der Zähne (7) um eine parallel zur Längsachse der Antriebswelle (1) ausgerichtete Achse konvex gewölbt sind.

3. Verbindung nach Anspruch 1 oder 2, **dadurch gekennzeichnet, daß** auf der Innenseite der Anschlußhaube (5) eine Druckübertragungsplatte (10) angeordnet ist, die mittig eine dem Kugelende (8) der Antriebswelle (1) angepaßte teilkugelförmige Ausnehmung (11) aufweist.

4. Verbindung nach einem der vorhergehenden Ansprüche, **dadurch gekennzeichnet, daß** das Kugelende (8) der Antriebswelle (1) als von der Antriebswelle (1) beaufschlagte Kugel (12) ausgebildet ist.

5. Verbindung nach Anspruch 4, **dadurch gekennzeichnet, daß** die Kugel (12) mit der Antriebswelle verklebt ist.

6. Verbindung nach Anspruch 4 oder 5, **dadurch gekennzeichnet, daß** die Kugel (12) aus Hartmetall besteht.

## Claims

1. Assembly of a drive shaft (1) with the cutting head hub of a submersible granulator with a connecting cap (5) which is fastened floatingly to the drive shaft (1) and which incorporates at its outer end an external thread (9) for the cutting head hub to be screwed on by means of a corresponding internal thread, where the drive shaft (1) is in contact with the inside of the connecting cap (5) by a spherical end portion (8), **characterised in that** a toothed ring (4) incorporating a set of external teeth (3) is arranged at the end (2) of the drive shaft (1) on the cutting head side,
the connecting cap (5) incorporates a set of internal teeth (6) which engages with the external teeth (3) of the toothed ring (4) and the outer surface of each tooth (7) of the toothed ring (3) is made convex.

2. Assembly in accordance with claim 1, **characterised in that** the flanks of the teeth (7) are made convex about an axis set parallel to the longitudinal axis of the drive shaft (1).

3. Assembly in accordance with claim 1 or 2, **characterised in that** arranged on the inside of the connecting cap (5) is a pressure transmission plate (10), which incorporates at its centre a partly concave recess (11) constructed to match the spherical end (8) of the drive shaft (1).

4. Assembly in accordance with any of the foregoing claims,
**characterised in that** the spherical end (8) of the drive shaft (1) is constructed as a sphere (12) to which pressure is applied from the drive shaft.

5. Assembly in accordance with claim 4, **characterised in that** the sphere (12) is bonded to the drive shaft.

6. Assembly in accordance with claim 4 or 5, **characterised in that** the sphere (12) is made of hard metal.

## Revendications

1. Assemblage d'un arbre d'entraînement (1) avec le moyeu de corps de couteau pour granulateurs immergés, avec un capot de raccordement (5) immobilisable de façon pendulaire sur l'arbre d'entraînement (1), lequel capot présente en son extrémité extérieure un filetage (9) destiné à recevoir le moyeu de corps de couteau à visser au moyen d'un taraudage correspondant, sachant que l'arbre d'entraînement (1) applique par l'extrémité d'une bille (8) contre le côté intérieur du capot de raccordement (5), **caractérisé en ce que** contre l'extrémité (2) de l'arbre d'entraînement (1) située du côté du corps de couteau se trouve une couronne dentée (4) présentant une denture extérieure (3),
**en ce que** la vis de raccordement (5) présente une denture intérieure (6) engrenant dans la denture extérieure (3) de la couronne dentée (4) et **en ce que** la surface extérieure de chaque dent (7) de la couronne (3) présente une convexité.

2. Assemblage selon la revendication 1, **caractérisé en ce que** les flancs des dents (7) présentent une convexité formée autour d'un axe aligné parallèle à l'axe longitudinal de l'arbre d'entraînement (1).

3. Assemblage selon la revendication 1 ou 2, **caractérisé en ce que** sur le côté intérieur du capot de raccordement (5) est disposée une plaque (10) transmettrice de pression qui présente en son milieu un évidement (11) de forme hémisphérique épousant l'extrémité de la bille (8) de l'arbre d'entraînement (1).

4. Assemblage selon l'une des revendications précédentes, **caractérisé en ce que** l'extrémité (8) de la bille de l'arbre d'entraînement (1) est configurée en bille (12) subissant la pression exercée par l'arbre d'entraînement (1).

5. Assemblage selon la revendication 4, **caractérisé en ce que** la bille (12) est collée avec l'arbre d'entraînement.

6. Assemblage selon la revendication 4 ou 5, **caractérisé en ce que** la bille (12) est en métal dur.
